Europäisches Patentamt

European Patent Office

Office européen des brevets

(11) Veröffentlichungsnummer: **0 468 167 A1**

## (12) EUROPÄISCHE PATENTANMELDUNG

(21) Anmeldenummer: **91109018.1**

(51) Int. Cl.5: **C04B 41/89**

(22) Anmeldetag: **03.06.91**

(30) Priorität: **29.06.90 DE 4020716**

(43) Veröffentlichungstag der Anmeldung:
**29.01.92 Patentblatt 92/05**

(84) Benannte Vertragsstaaten:
**AT BE CH DE DK ES FR GB GR IT LI LU NL SE**

(71) Anmelder: **GAIL AG**
**Erdkauterweg 40-50**
**W-6300 Giessen(DE)**

(72) Erfinder: **Markens, Rainer**
**Lausköppel 16**
**W-6300 Giessen-Petersweiher(DE)**

(74) Vertreter: **Missling, Arne, Dipl.-Ing.**
**Patentanwalt Bismarckstrasse 43**
**W-6300 Giessen(DE)**

(54) Verfahren für die Oberflächengestaltung von plattenförmigen keramischen Massen.

(57) Für die Oberflächengestaltung und Dekoration von keramischen Produkten, insbesondere von Platten, Fliesen oder Kacheln, wird zur Erstellung einer variationsreichen Oberflächengestaltung zunächst die keramische Masse zu einem plattenförmigen Preßling gepreßt und anschließend vorgetrocknet. Die Oberfläche des Preßlings wird entweder unmittelbar im Siebdruckverfahren mit einer Siebdruckpaste bedruckt oder aber zunächst mit einer Engobe beschichtet, wobei die keramische Masse, die Engobe, die Siebdruckpaste und die Glasur in ihren chemischen und physikalischen Eigenschaften im Hinblick auf Haftung, Schmelzpunkt, Viskosität, Ausdehnungskoeffizient aufeinander abgestimmt sind, wobei anschließend der Preßling gebrannt und auf die bedruckte Seite des auf Brenntemperatur befindlichen Preßlings ein die Glasur bildendes Granulat aufgebracht wird. Anschließend erfolgt der Fertigbrand des Preßlings.

EP 0 468 167 A1

Die Erfindung betrifft ein Verfahren für die Oberflächengestaltung und Dekoration von keramischen Produkten, insbesondere von Platten, Fliesen, Kacheln und dergleichen.

Die Dekoration und Farbgestaltung der Oberfläche von keramischen Platten wird durch das Zusammenwirken der Masse der keramischen Platte, einer auf der keramischen Platte aufgebrachten Engobe, sowie der die Platte bzw. die Engobe überdeckenden Glasur erhalten. Je nach der chemischen Zusammenwirkung dieser Stoffe untereinander sowie der Brenntemperatur kann eine spezielle Färbung der Oberfläche erhalten werden.

Der Erfindung liegt die Aufgabe zugrunde, das eingangs genannte verfahren derart zu verbessern, daß die Möglichkeiten der Oberflächengestaltung und damit die Variationsmöglichkeiten wesentlich erhöht werden.

Diese Aufgabe wird erfindungsgemäß dadurch gelöst, daß die keramische Masse zu einem plattenförmigen Preßling gepreßt und anschließend vorgetrocknet wird, bis diese eine Feuchtigkeit von weniger als 1 % aufweist, daß die Oberfläche des Preßlings entweder unmittelbar im Siebdruckverfahren mit einer Siebdruckpaste bedruckt wird, oder aber zuvor auf den Preßling eine Schicht aus einer Engobe aufgebracht wird, wobei die keramische Masse, die Engobe, die Siebdruckpaste und die Glasur in ihren chemischen und physikalischen Eigenschaften im Hinblick auf Haftung, Schmelzpunkt, Viskosität, Ausdehnungskoeffizient aufeinander abgestimmt sind, daß der Preßling anschließend gebrannt wird und daß auf die bedruckte Seite des auf Brenntemperatur befindlichen Preßlings ein die Glasur bildendes Granulat aufgebracht wird und daß anschließend der Preßling fertiggebrannt wird.

Gemäß der Erfindung wird somit zunächst die keramische Platte gepreßt und vorgetrocknet. Im Anschluß hieran kann entweder der Preßling unmittelbar mit der Siebdruckpaste im Siebdruckverfahren bedruckt werden, wobei jedes gewünschte Muster erzeugt werden kann. Die Zusammensetzung der Siebdruckpaste muß zum einen in ihrer chemischen Zusammensetzung und in ihren physikalischen Eigenschaften an die keramische Masse sowie an die Engobe wie auch an die später aufzutragende Glasur angepaßt sein, und zum anderen geeignet sein, im Siebdruckverfahren auf den Preßling aufgebracht zu werden. Als Siebdruckpasten haben sich Zusammensetzungen bewährt, wie sie im Anspruch 5 und 6 genannt sind.

Auf die auf den Preßling aufgebrachte Siebdruckpaste kann dann eine weitere Engobe aufgebracht werden, wobei die Zusammensetzung der beiden Engobenschichten voneinander differieren kann. Aufgrund der unterschiedlichen chemischen Zusammensetzungen der Engobeschichten wie auch der Siebdruckpaste ist es möglich, ein vielfältiges Farbenspiel zu erzeugen, wobei durch die im Siebdruckverfahren aufgebrachte Siebdruckpaste beliebige Motive auf dem Preßling darstellbar sind. Als Engobenzusammensetzung haben sich die in den Ansprüchen 3 und 4 genannten Engoben besonders bewährt.

Vor dem Auftragen der Glasur, wird der mit dem Siebdruck sowie mit einer oder mehreren Engoben beschichtete Preßling gebrannt. Dann wird auf den sich noch praktisch auf Brenntemperatur befindlichen Preßling die Glasur in Granulatform aufgestreut, worauf dann der Fertigbrand erfolgt, der zu einem Aufschmelzen der Engoben, Siebdruckpasten und Granulat der Glasur und zu der gewünschten Oberflächendekoration des Preßlings führt.

**Patentansprüche**

1. Verfahren für die Oberflächengestaltung und Dekoration von keramischen Produkten, insbesondere von Platten, Fliesen, Kacheln und dergleichen, dadurch gekennzeichnet, daß
   - die keramische Masse zu einem plattenförmigen Preßling gepreßt und anschließend vorgetrocknet wird, bis diese eine Feuchtigkeit von weniger als 1 % aufweist, daß
   - die Oberfläche des Preßlings entweder unmittelbar im Siebdruckverfahren mit einer Siebdruckpaste bedruckt wird oder aber zuvor zunächst auf den Preßling eine Schicht aus einer Engobe aufgebracht wird, wobei die keramische Masse, die Engobe, die Siebdruckpaste und die Glasur in ihren chemischen und physikalischen Eigenschaften im Hinblick auf Haftung, Schmelzpunkt, Viskosität, Ausdehnungskoeffizient aufeinander abgestimmt sind, daß
   - der Preßling anschließend gebrannt wird und daß
   - auf die bedruckte Seite des auf Brenntemperatur befindlichen Preßlings ein die Glasur bildendes Granulat aufgebracht wird und daß anschließend
   - der Preßling fertiggebrannt wird.

2. Verfahren nach Anspruch 1, dadurch gekennzeichnet, daß auf die im Siebdruckverfahren bedruckte Fläche eine weitere Schicht aus einer Engobe aufgetragen wird, die wiederum von der Glasur bedeckt ist.

3. Verfahren nach Anspruch 1, dadurch gekennzeichnet, daß die Engobe folgende Zusammensetzung in Gew. % aufweist:

| | | |
|---|---|---|
| $Na_2O/K_2O$ | 3,5 | − 4,5 |
| MgO | 2,5 | − 3,0 |
| CaO | 6 | − 7 |
| BaO | 6,5 | − 7,5 |
| ZnO | 3 | − 4 |
| PbO | 1 | − 5 |
| $Al_2O_3$ | 12 | − 14 |
| $SiO_2$ | 44 | − 46 |
| $ZrO_2$ | 16 | − 17. |

4. Verfahren nach Anspruch 1, dadurch gekennzeichnet, daß die Engobe folgende Zusammensetzung in Gew. % aufweist:

| | | |
|---|---|---|
| $Li_2O$ | 0 | − 1 |
| $Na_2O/K_2O$ | 2 | − 3 |
| MgO | 2 | − 3 |
| CaO | 5 | − 6 |
| BaO | 9 | − 10 |
| ZnO | 2 | − 2,5 |
| PbO | 2,5 | − 3,5 |
| $Al_2O_3$ | 26 | − 28 |
| $SiO_2$ | 38 | − 40 |
| $ZrO_2$ | 9 | − 10 . |

5. Verfahren nach einem der Ansprüche 1 bis 4, dadurch gekennzeichnet, daß die Siebdruckpaste folgende Zusammensetzung in Gew. % aufweist:

$$
\begin{array}{lcc}
SiO_2 & 47 & - \ 50 \\
B_2O_3 & 17 & - \ 19 \\
Na_2O & 7 & - \ 9 \\
Al_2O_3 & 18 & - \ 20 \\
CaO & 4 & - \ 6 \ .
\end{array}
$$

6. Verfahren nach einem der Ansprüche 1 bis 4, dadurch gekennzeichnet, daß die Siebdruckpaste folgende Zusammensetzung in Gew. % aufweist:

$$
\begin{array}{lcc}
SiO_2 & 44 & - \ 46 \\
NaO_2 & 0,5 & - \ 2 \\
K_2O & 0,5 & - \ 2 \\
CaO & 12 & - \ 14 \\
ZnO & 13 & - \ 15 \\
B_2O_3 & 4 & - \ 6 \\
Al_2O_3 & 18 & - \ 20 \ .
\end{array}
$$

7. Verfahren nach einem der Ansprüche 1 bis 6, dadurch gekennzeichnet, daß die Glasur folgende Zusammensetzung in Gew. % aufweist:

$Li_2O$       7    -    9

$P_2O_5$     1,75 -   3,9

$B_2O_3$     0,7   -   2,0

$AL_2O_3$     9     - 11,5

$MgO$      6     -    8

$K_2O$      0,5   -   2,3

$Na_2O$     0,5   -   2,3

$ZrO_2$     0,5   -   3,0

$TiO_2$     5     -   7,3

Rest $SiO_2$ .

8. Verfahren nach Anspruch 7, dadurch gekennzeichnet, daß die Glasur folgende Zusammensetzung in Gew. % aufweist.

$Li_2O$       7,2

$P_2O_5$      2,7

$B_2O_3$      1,3

$Al_2O_3$     10,4

$MgO$       7,0

$K_2O$       1,3

$Na_2O$      1,2

$ZrO_2$      1,1

$TiO_2$      6,2

Rest $SiO_2$.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | GB-A-1 004 304   (J. HULME)<br>* Seite 1, Zeile 9 - Zeile 75; Ansprüche 1,5 *<br>— — — | 1-2 | C 04 B 41/89 |
| Y | GB-A-1 454 263   (K. W. HILTON)<br>* Seite 1, Zeile 16 - Seite 2, Zeile 44; Ansprüche 1-2; Beispiel 1 *<br>— — — | 1-2 | |
| A | DE-C-130 948   (G. V.D. BORNE)<br>* Seite 1, Zeile 17 - Seite 2, Zeile 3 *<br>— — — | 1-2 | |
| A | FR-A-1 162 883   (FAIENCERIE CERANORD)<br>* Seite 1, Zeile 22 - Zeile 34 * * Seite 1, Zeile 56 - Seite 2, Zeile 3; Anspruch 1 *<br>— — — | 1-2 | |
| A | US-A-3 560 236   (W. H. ORTH)<br>* Zusammenfassung; Ansprüche 1-2 * * Spalte 5, Zeile 11 - Spalte 6, Zeile 23 *<br>— — — | 1,5 | |
| A | CHEMICAL ABSTRACTS, vol. 102, no. 18, Mai 1985, Columbus, Ohio, US; abstract no. 153804Q, 'Matte glazing of porcelain tiles ' Seite 282 ;Spalte 2 ;<br>* Zusammenfassung & JP-A-59 227 788 (INA SEITO CO.) 21. Dezember 1984 *<br>— — — | 1,5 | **RECHERCHIERTE SACHGEBIETE (Int. Cl.5)**<br><br>C 04 B |
| A | DE-A-1 496 646   (E. I. DU PONT NEMOURS & COMPANY)<br>* Seite 1, Zeile 1 - Seite 2, Zeile 15 * * Seite 4, Zeile 3 - Zeile 24 * * Seite 8, Zeile 21 - Zeile 24; Ansprüche 1-3 *<br>— — — | 1,3-4 | |
| A | FR-A-2 128 018   (SCM CORPORATION)<br>* Seite 1, Zeile 1 - Seite 2, Zeile 10 * * Seite 9, Zeile 15 - Seite 10, Zeile 32 * * Seite 14, Zeile 29 - Seite 15, Zeile 11 *<br>* Ansprüche 2,5,7; Beispiel 4; Tabelle 2 *<br>— — — — — | 1,7 | |

Der vorliegende Recherchenbericht wurde für alle Patentansprüche erstellt

| Recherchenort | Abschlußdatum der Recherche | Prüfer |
|---|---|---|
| Den Haag | 19 September 91 | NORGREN-OLSSON |